(19) Europäisches Patentamt
European Patent Office
Office européen des brevets

(11) Publication number: **0 491 856 B1**

(12) **EUROPEAN PATENT SPECIFICATION**

(45) Date of publication of patent specification: **09.08.95**

(51) Int. Cl.[6]: **C10M 139/00**, C10M 159/18, C07F 5/04

(21) Application number: **90914861.1**

(22) Date of filing: **14.09.90**

(86) International application number:
**PCT/US90/05138**

(87) International publication number:
**WO 91/04312 (04.04.91 91/08)**

(54) **ALKYLAMINE COMPLEXES OF BORATED ALKYL CATECHOLS AND LUBRICATING OIL COMPOSITIONS CONTAINING THE SAME.**

(30) Priority: **15.09.89 US 407602**
**15.09.89 US 407833**
**27.09.89 US 413420**
**13.07.90 US 553487**

(43) Date of publication of application:
**01.07.92 Bulletin 92/27**

(45) Publication of the grant of the patent:
**09.08.95 Bulletin 95/32**

(84) Designated Contracting States:
**AT BE CH DE DK ES FR GB IT LI LU NL SE**

(56) References cited:
**US-A- 2 344 393**
**US-A- 2 795 548**
**US-A- 3 133 800**
**US-A- 3 442 807**
**US-A- 4 328 113**
**US-A- 4 629 578**
**US-A- 4 643 838**
**US-A- 4 781 850**
**US-A- 2 497 521**
**US-A- 2 883 412**
**US-A- 3 361 672**
**US-A- 3 445 498**
**US-A- 4 629 577**
**US-A- 4 632 771**
**US-A- 4 655 948**

**No relevant documents disclosed**

(73) Proprietor: **CHEVRON U.S.A. Inc.**
**1635 Market Street**
**Philadelphia**
**Pennsylvania 19103 (US)**

(72) Inventor: **SMALL, Vernon, R., Jr.**
**112 Bonita Court**
**Rodeo, CA 94572 (US)**
Inventor: **LISTON, Thomas, V.**
**31 Tweed Terrace**
**San Rafael, CA 94901 (US)**
Inventor: **ONOPCHENKO, Anatoli**
**1309 David Lane**
**Concord, CA 94518 (US)**

(74) Representative: **Müller-Boré & Partner Patentanwälte**
**Postfach 26 02 47**
**D-80059 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 491 856 B1

## Description

This invention is concerned with the product obtained by reacting a borated alkyl catechol with certain alkylamines and the use of said product in lubricant compositions.

Wear and deposits limit the useful life of automobile and truck engines.

Thus, there is a great need to find lubricant additives that, when used in the lubricant oil composition in the crankcase of an internal combustion engine, reduce the oxidation, wear and deposits in the engine, thus increasing the lifetime of the engine.

In this regard, U.S. Patent No. 2,795,548 discloses the use of lubricating oil compositions containing a borated alkyl catechol. The oil compositions of this reference are disclosed for use in the crankcase of an internal combustion engine in order to reduce oxidation of the oil and corrosion of the metal parts of the engine.

However, while such borated alkyl catechols impart such properties to the lubricating oil composition, there is a problem with the use of borated alkyl catechols in lubricating oil compositions since they are sensitive to moisture and hydrolyze readily. The hydrolysis leads to haze and/or precipitate formation which must be filtered out prior to use. It has now been found that the borated alkyl catechols may be stabilized against hydrolysis by complexing the borated alkyl catechol with certain alkylamines.

More importantly, lubricating the crankcase of an internal combustion engine with a lubricating oil composition containing the reaction product of a borated alkyl catechol and certain alkylamines reduces oxidation and wear in gasoline engines and deposits in diesel engines.

U.S. Patent No. 2,497,521 to Trautman relates to the use of amine salts of boro-diol complexes in hydrocarbon oil compositions. The amine salts of the boro-diol complexes are useful as stabilizing agents, i.e., anti-oxidants. The described boro-diol complexes include diols selected from the group consisting of glycols and polyhydroxy benzenes, including catechol. Catechol is a small polar compound which has poor solubility in essentially non-polar base oils under ambient conditions. The use of long chain alkyl catechols (e.g., alkyl chains of at least 10 carbon atoms) to enhance solubility and compatibility of the catechol in a base oil is not taught in Trautman. Additionally, Trautman teaches that a wide range of amines can be used to prepare the salts; indeed "any organic amine may be employed" (Col. 3, lines 51-71).

A recent patent (U.S. Patent No. 4,328,113) assigned to Mobil Oil Corporation teaches the use of high molecular weight ($C_8+$) amines and diamines with boric acid itself for use as grease and lubricating oil additives. The use of borated catechols let alone of borated alkylated catechols is not taught in this patent.

U.S. Patent No. 4,655,948 to Doner et al. discloses grease compositions having increased dropping points. Among the compositions described are mixtures of a hydroxy containing thickener and borated catechols having the structure:

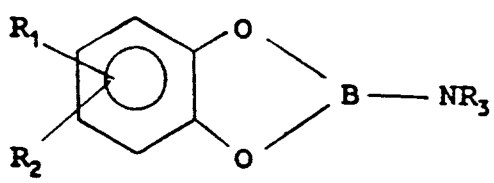

where $R_1$ and $R_2$ are each H or $C_1$ to $C_{40}$; and where $R_3$ is a $C_1$ to $C_{40}$ hydrocarbyl and can contain, additionally, oxygen, sulfur and/or nitrogen-containing moieties.

The catechol amine borate compounds of Doner et al., as indicated by the above formula, are described as triangonal boron compounds having nitrogen-boron single bonds formed by driving the condensation reaction to completion via the azeotropic removal of water. A variety of useful amines are described in Col. 2, lines 62 et seq. Although some amines listed contain secondary amine structures, the common link in all amines is the presence of primary amine structures. It is also to be noted that Doner's list of amines are all high molecular weight aliphatic amines, e.g., oleyl amine or are aromatic, i.e., aniline. Secondary and tertiary amines are not described. Moreover, primary amines such as monoalkylamines with short alkyl groups are not specifically taught by this reference.

U.S. Patent Nos. 3,113,800 and 3,203,971 to DeGray et al. disclose glycol borate amine compounds of aliphatic saturated glycols, useful as fuel additives, for example, and as deicing agents and bacteriocides. Useful amines, among others, include those with alkyl groups having from 3 to 20 carbon atoms.

U.S. Patent No. 2,883,412 to Lowe discloses p-xylylene diamine salts of glycol boric acids having superior corrosion inhibiting properties. Among the compounds disclosed are p-xylylene diamine adducts of

alkyl catechol borates, such as derived from butyl and cetyl catechol (Col. 3, lines 61-68).

Reaction of trialkyl borates with amines, including diethylamine, triethylamine, cyclohexylamine and ethylene diamine are described by Wilson in J. Chem. Soc. Dalton, 1973, pp. 1628 et seq., and by Colclough et al. in J. Chem. Soc., 1955, pp. 907 et seq. The latter, in addition, describes reactions of triphenylborates with amines and on page 909 shows that attempts to prepare a diethylamine and a triethylamine product resulted in a product that was low in amine content; but dry ethylamine formed a complex with triphenylborate. Moreover, even the much more stable pyridine complex of triphenylborate described in this paper hydrolyzed completely in moist air in 5 days. In any event, these references do not mention alkyl catechol derivatives.

However, Kuremel et al. in J. Amer. Chem. Soc. 78, pp. 4572 et seq. (1956) does talk about catechol-boric acid pyridine complexes. Kuremel shows on p. 4574 that "there is complete dissociation of the complexes into their substituents (pyrocatechol, pyridine, and boric acid) in alcoholic solution". Alkyl catechols were not mentioned.

U.S. Patent No. 4,629,578 to T.V. Liston teaches that a complex of borated alkyl catechol with a succinimide is useful in lubricant compositions. The succinimide additives of Liston are effective in stabilizing the borated alkyl catechol to hydrolysis. Preferred succinimides have a number average molecular weight of about 600 to about 1,500 (Col. 4, lines 12 et seq.). These high molecular weight succinimides effectively dilute the concentration of the desired borated alkyl catechols. In addition, using high molecular weight succinimides for hydrolytic stabilization results in higher transportation costs for the additive, and a loss of flexibility since their use is limited to formulations containing succinimides as dispersants, due to compatibility problems.

US-A-3 445 498 discloses compositions formed by reacting a polyhydroxyaromatic compound, a borylating agent and an N,N,-di-substituted hydroxyamine. The polyhydroxyaromatic compound can be a catechol und in such cases the reaction with the borylating agent will result in the formation of a cyclic borate complex. The formed complex is an adduct having a 1:1 boron:catechol mole ratio.

Previously, it was believed that low molecular weight amines would not be useful in lubricants subjected to high temperatures, e.g., >100 °C, because of the volatility of the amines; that is, it was believed that the amines would be lost during use and not provide ongoing stabilization against hydrolysis. Indeed, all prior art examples show lubricant-type compositions with higher molecular weight amines than the alkylamines used in this invention.

We have now surprisingly found that certain alkylamine-borated alkyl catechol complexes are stable with respect to decomposition to starting materials under "in use" conditions. Moreover, when the alkylamine stabilized alkyl borated catechols of this invention were tested in the L-38 engine test, lubricating oil compositions containing such complexes passed (with a score of about 30 mg weight loss or less), whereas the presence of "free" amine such as oleyl amine under these conditions would give very-high (300-600 mg) weight losses due to corrosion of the copper and lead bearings. Also, calorimetry data (DSC) shows that the alkylamine stabilized alkyl borated catechols of this invention are stable to about 177 °C or higher, which is significantly above the sump temperature of a gasoline engine.

On the other hand, the thermal stability of catechol boron amine complexes is not predictable. For example, dimethylamine does not form a stable complex with alkylated borated catechols nor does diisopropyl amine. The interaction of steric effects, nitrogen basicity and boron electro-philicity all come into play. These factors affect the equilibrium between the reactants and the products and make predictions of thermal stability impossible. One also cannot predict hydrolytic stability, which may or may not be related to thermal stability.

The problem, therefore, addressed and solved by this invention is how to hydrolytically stabilize borated alkyl catechols so as to achieve a higher concentration of boron per pound of the borated alkyl catechols. This is achieved by complexing such catechols and stabilizing the same with a low molecular weight stabilizing material, e.g., certain alkylamines.

According to the present invention, lubricating oils are provided which reduce wear, oxidation and deposits and are especially useful in the crankcase of internal combustion engines. The reduced wear, oxidation and deposits result from the addition to the lubricating oil of small amount of a complex prepared by reacting a borated alkyl catechol with one or more certain low molecular alkylamines. The alkylamines used to complex with the borated alkyl catechol are certain monoalkylamines, dialkylamines and trialkylamines.

As noted in further detail below, the borated alkyl catechols used in the present invention have a 3:2 mole ratio of alkyl catechol to boron [hereinafter "3:2 borated alkyl catechol(s)"].

Monoalkylamines useful for complexing with the borated alkyl catechol have from 2 to 10 carbon atoms and from 0 to 3 hydroxyl groups. Preferred monoalkylamines have the formula:

$H_2N-R^i$

where $R^i$ can be an aliphatic hydrocarbon radical having from 2 to 10 carbon atoms, preferably to 2 to 6 carbon atoms, and where the aliphatic hydrocarbon radical can, optionally, have from one to three hydroxyl groups; or an alicyclic hydrocarbon radical having 5 or 6 carbon atoms [hereinafter "defined monoalkylamine(s)"].

Suitable monoalkylamines include 2-ethylhexylamine; ethylamine; n-butylamine; hexylamine; cyclohexylamine, hydroxyethylamine; hydroxypropylamine; and dihydroxypropylamine. The amines can be used alone or a mixture of amines can be employed.

Unsuitable amines include ammonia, methylamine and benzylamime.

The defined monoalkylamines can be used to stabilize, the 3:2 borated alkyl catechol(s) or mixtures thereof.

Dialkylamines useful for complexing with the borated alkyl catechol are represented by the formula:

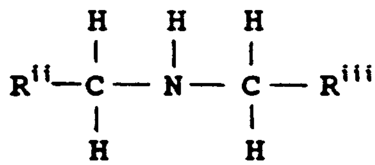

where $R^{ii}$ is phenyl or an aliphatic hydrocarbon radical having from 2 to 9 carbon atoms and $R^{iii}$ is selected from the group consisting of hydrogen, phenyl and an aliphatic hydrocarbon radical having from 1 to 9 carbon atoms and wherein said aliphatic carbon atoms of $R^{ii}$ and/or $R^{iii}$ can optionally form a 5- or 6-membered alicyclic ring with the alpha carbon atom; and wherein the total number of carbon atoms in $R^{ii}$ plus $R^{iii}$ is no more than 16 [hereinafter defined "dialkylamine(s)"].

Preferably, the dialkylamines have from 5 to 15 total carbon atoms, i.e., where $R^{ii}$ has from 2 to 6 carbon atoms and $R^{iii}$ has from 1 to 7 carbon atoms and the sum of $R^{ii}$ and $R^{iii}$ is from 3 to 13.

Suitable dialkylamines include ethylpropylamine; dibutylamine; dihexylamine; dicyclohexylamine; ethylbenzylamine; methylbutylamine; methylhexylamine; dibenzylamine; and methylcyclohexylamine. The amines can be used alone or in a mixture of amines can be employed.

Unsuitable dialkylamines for use in this invention include dimethylamine and diisopropylamine.

The defined dialkylamines can be used to stabilize the 3:2 borated alkyl catechol(s).

Trialkylamines useful for complexing with the borated alkyl catechol have from 3 to 27 carbon atoms and from 0 to 3 hydroxyl groups and wherein such alkyl groups can be aliphatic or alicyclic hydrocarbon radicals. Preferred trialkylamines have the formula:

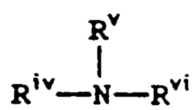

where $R^{iv}$, $R^v$ and $R^{vi}$ can be the same or different and be an aliphatic hydrocarbon radical having from 1 to 9 carbon atoms, preferably 1 to 6 carbon atoms, or alicyclic hydrocarbon radical having 5 or 6 carbon atoms. Optionally, $R^{iv}$, $R^v$ and $R^{vi}$ can have from one to three hydroxyl groups. For steric reasons, it is preferred that at least two of the R groups be aliphatic and wherein the total number of carbon atoms in $R^{iv}$, $R^v$ and $R^{vi}$ is no more than 18 [hereinafter "defined trialkylamine(s)"].

Preferably, the trialkylamines have from 6 to 18 total carbon atoms, i.e., where $R^{iv}$, $R^v$ and $R^{vi}$ each has from 2 to 6 carbon atoms.

Suitable trialkylamines include triethylamine; triisopropanolamine; tributylamine; trihexylamine; tricyclohexylamine; and triethanolamine. The amines can be used alone or a mixture of amines can be employed.

The defined trialkylamines can be used to stabilize only the 3:2 borated alkyl catechol(s).

The method of preparation of the defined monoalkylamines, dialkylamines and trialkylamines forms no part of this invention. Such amines are available in the marketplace or can be prepared by methods known

in the art.

The defined monoalkylamines, the defined dialkylamines and the defined trialkylamines used in this invention are sometimes generically referred to herein as the "defined amines".

Thus, in one aspect, this invention relates to a lubricating oil composition comprising an oil of lubricating viscosity and a minor amount of a hydrolytically stable complex of a 3:2 borated alkyl catechol and an amine selected from the group consisting of the defined monoalkyl-amines, the defined dialkylamines, the defined trialkylamines and mixtures thereof.

In another aspect, this invention relates to a concentrate of a neutral carrier oil containing from 5 to 80 weight percent (based on the weight of the neutral oil) of a hydrolytically stable complex of a 3:2 borated alkyl catechol and an amine selected from the group consisting of the defined monoalkylamines, the defined dialkylamines, the defined trialkylamines and mixtures thereof.

These complexes may be readily prepared by contacting (a) a 3:2 borated alkyl catechol and (b) an amine selected from the group consisting of the amines defined above (the defined monoalkylamines, dialkylamines, and trialkylamines) and mixtures thereof under conditions wherein a complex is formed between the defined amine and the borated alkyl catechol, the amount of defined amine being sufficient to stabilize the borated alkyl catechol against hydrolysis. The defined trialkylamines are effective in stabilizing the 3:2 borated alkyl catechols against hydrolysis.

Other additives may also be present in the lubricating oils in order to obtain a proper balance of properties such as dispersancy, corrosion, wear and oxidation inhibition which are critical for the proper operation of an internal combustion engine.

In still another aspect of this invention, there is provided a method for reducing wear, oxidation and deposits in an internal combustion engine by utilizing the lubricating oil composition described above in the operation of the internal combustion engine. Specifically, improvements in deposits of from 10-50% may be obtained by employing the composition of this invention as compared to the deposits recorded with the use of lubricating oil compositions not containing a borated alkyl catechol-amine complex of this invention. This deposit improvement can be obtained in compression-ignition engines, that is, diesel engines. Improvements in viscosity control of 25%-50% can be obtained in spark-ignition engines, that is gasoline engines, as compared to the viscosity control recorded with the use of lubricating oil compositions not containing a borated alkyl catechol-amine complex of this invention. That is, lubricating oil compositions containing the borated alkyl catechol amine complexes of this invention have been found additionally to possess (1) antioxidant properties in gasoline engines and (2) diesel deposit inhibition when employed in diesel engines.

The borated alkyl catechols used to prepare the complexes of this invention may be prepared by borating an alkyl catechol with boric acid with removal of the water of reaction. Typically, there is sufficient boron present such that each boron will react with about 2 to 3 hydroxyl groups present in the reaction mixture. (See Formulas IV, V and VI below.)

The reaction may be carried out at a temperature in the range of 60°C-135°C or higher, in the absence or presence of any suitable organic solvent which forms an azeotrope with water such as benzene, xylenes, toluene and the like.

Depending on the ratio of alkyl catechol to boron, the composition of the borated alkyl catechol, and therefore the composition of the amine complex (adduct) varies. It is believed that at a 3:2 ratio of alkyl catechol to boron and a 1:1 ratio of boron to nitrogen, the predominant product has a structure like Formula V below.

The alkyl catechols or mixtures thereof which may be used to prepare the borated alkyl catechols used in this invention are preferably mixtures of monoalkyl and dialkyl catechols. The monoalkyl catechols are preferably of Formula I

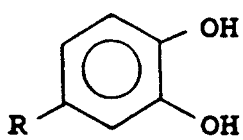

**Formula I**

wherein R is alkyl containing at least 10 carbon atoms, preferably from about 10 to about 30 carbon atoms, more preferably from 18 to 24 carbon atoms and even more preferably 20 to 24 carbon atoms. Also, up to

60% by weight but preferably less than 40% by weight of the monoalkyl catechols may have the R group in a position adjacent or ortho to one of the hydroxy groups and have the Formula II

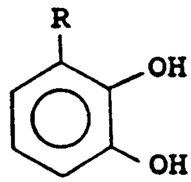

**Formula II**

wherein R is as defined above.

The dialkyl catechols which may be used to prepare a mixture of borated alkyl catechols of this invention are generally of Formula III

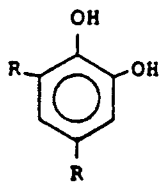 and/or 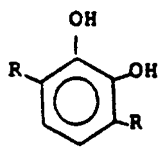 and/or 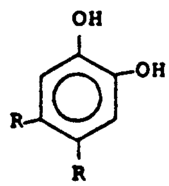 and/or 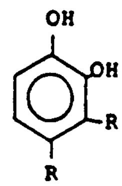

**Formula III**

wherein R is as defined above and the two R groups can be the same or different. Trialkyl catechols may also be employed although they are not preferred.

Among the alkyl catechols which may be employed are decyl catechol, undecyl catechol, dodecyl catechol, tetradecyl catechol, pentadecyl catechol, hexadecyl catechol, octadecyl catechol, eicosyl catechol, hexacosyl catechol, triacontyl catechol, and the like. Also, a mixture of alkyl catechols may be employed such as a mixture of $C_{14}$-$C_{18}$ alkyl catechols, a mixture of $C_{18}$-$C_{24}$ alkyl catechols, a mixture of $C_{20}$-$C_{24}$ alkyl catechols, or a mixture of $C_{16}$-$C_{26}$ alkyl catechols may be used.

The alkyl catechols of the Formulae I, II and III may be prepared by reacting an appropriate olefin (e.g., a $C_{10}$-$C_{30}$ olefin such as a branched olefin or straight-chain alpha olefin containing 10 to 30 carbon atoms or mixtures) with catechol in the presence of a sulfonic acid catalyst at a temperature of from about 60°C-200°C, preferably 125°C-180°C, and most preferably 130°C-150°C in an essentially inert solvent at atmospheric pressure. Although alkylation of catechol can be carried out neat, in absence of solvents, the use of solvents, particularly in a batch reactor greatly facilitates the process due to better contact of the reactants, improved filtration, etc. Examples of the inert solvents include benzene, toluene, chlorobenzene and Chevron 250 Thinner which is a mixture of aromatics, paraffins and naphthenes.

The term "branched olefin" means that branching occurs at the double bond, i.e., vinylidene olefins or trisubstituted olefins. The term "straight-chain alpha olefin" means that the alpha olefin contains little (less than about 20%) or no branching at the double bond or elsewhere.

Monoalkyl catechols are preferred. A product which is predominantly monoalkyl catechol may be prepared by using molar ratios of reactants (catechol and alkylating olefin) and preferably a 10% molar excess of branched olefin or alpha olefin over catechol is used. When used at molar ratios, the resulting products are generally predominantly monoalkyl catechols but do contain some amounts of dialkyl catechol. A molar excess of catechol (e.g., two equivalents of catechol for each equivalent of olefin) can be used in order to enhance monoalkylation if predominantly monoalkyl catechol is desired. Predominantly dialkyl catechols may be prepared by employing a molar excess of olefin, such as two equivalents of the same or different olefin per equivalent of catechol.

Dialkyl catechols are also useful in this invention. A typical weight ratio of monoalkyl to dialkyl catechol is in the range of 1:3 to 3:1.

Use of a branched olefin results in a greater proportion of alkyl catechols of Formula I than use of straight-chain alpha olefins. Use of such branched olefins generally results in greater than 90% alkyl catechol of Formula I and less than 10% alkyl catechol of Formula II. On the other hand, the use of a straight-chain alpha olefin generally results in approximately 50% of alkyl catechols of Formula I and 50% of Formula II. In a case of $C_{20}$-$C_{24}$ olefin mixture, for example, containing 20% branching, the corresponding alkyl catechols will comprise about 60% of Formula I and 40% of Formula II. When the same or different olefin mixture contains 50% branching, the corresponding alkyl catechols will comprise approximately 70% of Formula I and 30% of Formula II.

The exact structure of the borated alkyl catechol-amine complex of this invention is not known for certain. However, while not limiting this invention to any theory, it is believed that the compounds of this invention have a tetrahedral boron atom with three B-O bonds. The boron is either complexed to the nitrogen atom in the dialkylamine via dative bonding, or is present as a salt.

Tetrahedral Boron

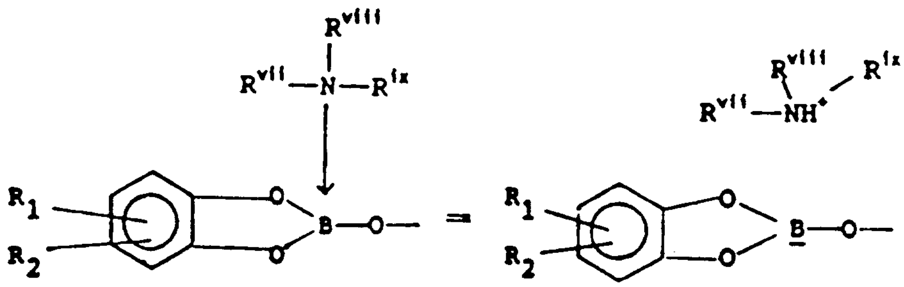

**Formula IV**

Formula IV illustrates dative bonding.

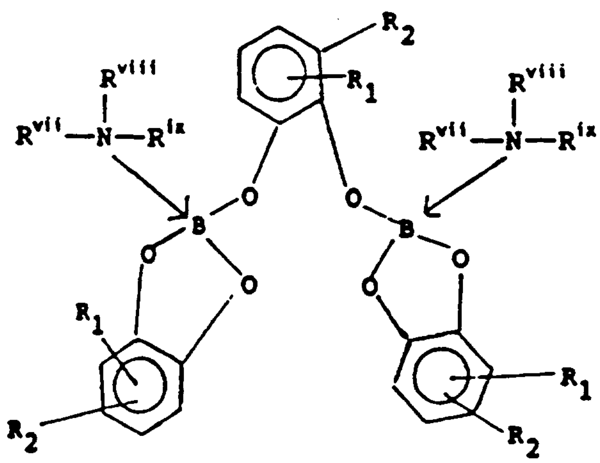

**Formula V**

Formula V is a 3:2 catechol to boron complex.

In Formulae IV and V, above, $R_1$ represents an alkyl group; $R_2$ is either hydrogen or an alkyl group; and $R^{vii}$, $R^{viii}$ and $R^{ix}$ are the necessary substituents to describe a defined monoalkylamine, dialkylamine or trialkylamine for use in this invention (e.g., for example, if

$$\begin{array}{c} R^{viii} \\ | \\ R^{vii}-N-R^{ix} \end{array}$$

represents a defined monoalkyl, the $R^{vii}$ and $R^{viii}$ are hydrogen and $R^{ix}$ is $R^{i}$ wherein $R^{i}$ is as defined above.

A borated alkyl catechol having a 3:2 mole ratio of catechol to boron (Formula V) is a function of the mole ratio of catechol to boron as noted above. The products that are believed to be present are a 1:1 product and the 3:2 product according to the present invention. Nevertheless, due to equilibrium considerations, the product most likely is a mixture of the 1:1 and 3:2 complexes in varying proportions depending on the stoichiometry used. We have found that a 3:2 product is just as effective in a Sequence IIID test as the 1:1 product. It is thus preferred for cost and handling reasons that the borated alkyl catechol predominate in the 3:2 product and, more prefer- ably, be substantially only the 3:2 liquid pro-duct, i.e., that the product be made using a mole ratio of alkyl catechol to boron of about 3:2.

The complex may be formed by reacting the borated alkyl catechol and the defined monoalkylamine, dialkylamine and/or trialkylamine together neat at a temperature above the melting point of the mixture of reactants and below the decomposition temperature, or at a suitable temperature in a diluent in which both reactants are soluble. (As above, if a defined trialkylamine is employed, the borated alkyl catechol utilized therewith is a 3:2 borated alkyl catechol.) Suitable temperatures can be about 30°C to 100°C, preferably about 50°C. For example, the reactants may be combined in the proper ratio in the absence of a solvent to form a homogeneous product or the reactants may be combined in the proper ratio in a solvent such as toluene or benzene, xylenes, chlorobenzene, or thinner, and the solvent then stripped off. The complex formed by either technique may then be added to the oil. Most defined amine complexes of borated alkyl catechols are either liquids at room temperature, or low melting solids (m.p. 30°C-40°C) depending on the composition of their isomers and the purity of the product. Alternatively, the complex may be prepared in a lubricating oil as a concentrate containing from about 5 to 80% by weight of the complex, which concentrate may be added in appropriate amounts to the lubricating oil in which it is to be used or the complex may be prepared directly in the lubricating oil in which it is to be used.

The diluent is preferably inert to the reactants and products formed, and is used in an amount sufficient to ensure solubility of the reactants and to enable the mixture to be efficiently stirred.

Temperatures for preparing the complex may be in the range of from 20°C-200°C and preferably 25°-60°C and under sufficient pressure to maintain the defined amine in the liquid phase. The most preferred temperatures depend on whether the complex is prepared neat or in a diluent, i.e., higher temperatures may be used when a solvent is employed.

An effective amount of defined amine is added in order to stabilize the borated alkyl catechols against hydrolysis. In general, mole ratios of the defined amine to boron used to form the complex are in the range of 0.8:1 to 1.1:1, and preferably from 0.9:1 to 1:1, and most preferably 1:1. This latter ratio is preferred if the complex is made and/or stored neat or in the absence of solvent or lubricating oil and under atmospheric conditions. Higher amounts of the defined amine can be used but provide no advantages. However, normally excess amine is added to insure complete stabilization and unreacted amine is recovered and recycled.

As used herein, the term "stabilized against hydrolysis" means that the borated alkyl catechol-amine complex does not "skin-over" or form a precipitate due to the hydrolysis of the borated catechol for a period of at least one week, preferably three months, when stored at room temperature (~15°-25°C) and ambient humidity, i.e., no observable or measurable free boric acid is formed. By a stabilizing amount of amine is meant that amount to stabilize the borated alkyl catechol against hydrolysis.

The amount of the complex required to be effective for reducing wear, oxidation and deposits in lubricating oil compositions is a minor amount and may range from 0.05% to 20% by weight based on the weight of the total lubricant composition. However, in the preferred embodiment, it is desirable to add sufficient complex so that the amount of borated catechol is added at a range from 0.1% to about 4% by weight of the total lubricant composition and preferably is present in the range from 0.2% to 2% by weight and most preferably 0.5% to 1%. The defined amine is present in the complex of the invention in an amount effective to stabilize the borated alkyl catechol against hydrolysis and which allows the borated alkyl catechol to function as an effective oxidation and deposit reducing agent.

The defined amine-borated alkyl catechol complexes of this invention can be added to a lubricating oil (or can be made in the lubricating oil). In addition, it is contemplated that the complexes of this invention

can be sold as a concentrate in a neutral oil with or without other ingredients such as dispersants, antirust agents, etc. The concentrate can therefore comprise a complex of a borated alkyl catechol and an amount to hydrolytically stabilize the borated alkyl catechol of a defined amine plus a neutral carrier oil. The weight percent of the defined dialkylamine stabilized borated alkyl catechol in the concentrate is usually from 5 to 80 based on the weight of neutral carrier oil, typically 10 to 60. The term "neutral oil" is well known in the art, such as those neutral oils made commercially which have a viscosity in the lubricating oil range, such as 100 neutral oils, 200 neutral oils, etc.

In general, the complexes of this invention may also be used in combination with other additive agents in conventional amounts for their known purpose.

For example, for application in modern crankcase lubricants, the base composition described above will be formulated with supplementary additives to provide the necessary stability, detergency, dispersancy, antiwear and anticorrosion properties.

Thus, as another embodiment of this invention, the lubricating oils which contain the complexes prepared by reacting the borated alkyl catechols and the defined amine may also contain an alkali or alkaline earth metal hydrocarbyl sulfonate, an alkali or alkaline earth metal phenate, and Group II metal salt dihydrocarbyl dithiophosphate, and conventional viscosity index improvers.

The alkali or alkaline earth metal hydrocarbyl sulfonates may be either petroleum sulfonate, synthetically alkylated aromatic sulfonates, or aliphatic sulfonates such as those derived from polyisobutylene. One of the more important functions of the sulfonates is to act as a detergent and dispersant. These sulfonates are well known in the art. The hydrocarbyl group must have a sufficient number of carbon atoms to render the sulfonate molecule oil soluble. Preferably, the hydrocarbyl portion has at least 20 carbon atoms and may be aromatic or aliphatic, but is usually alkylaromatic. Most preferred for use are calcium, magnesium or barium sulfonates which are aromatic in character.

Certain sulfonates are typically prepared by sulfonating a petroleum fraction having aromatic groups, usually mono- or dialkylbenzene groups, and then forming the metal salt of the sulfonic acid material. Other feedstocks used for preparing these sulfonates include synthetically alkylated benzenes and aliphatic hydrocarbons prepared by polymerizing a mono- or diolefin, for example, a polyisobutenyl group prepared by polymerising isobutene. The metallic salts are formed directly or by metathesis using well-known procedures.

The sulfonates may be neutral or overbased having base numbers up to about 400 mg of KOH per gram of sample or more. Carbon dioxide and calcium hydroxide or oxide are the most commonly used material to produce the basic or overbased sulfonates. Mixtures of neutral and overbased sulfonates may be used. The sulfonates are ordinarily used so as to provide from 0.3% to 10% by weight of the total composition. Preferably, the neutral sulfonates are present from 0.4% to 5% by weight of the total composition and the overbased sulfonates are present from 0.3% to 3% by weight of the total composition.

The phenates for use in this invention are those conventional products which are the alkali or alkaline earth metal salts of alkylated phenols. One of the functions of the phenates is to act as a detergent and dispersant. Among other things, it prevents the deposit of contaminants formed during high temperature operation of the engine. The phenols may be mono- or polyalkylated.

The alkyl portion of the alkyl phenate is present to lend oil solubility to the phenate. The alkyl portion can be obtained from naturally occurring or synthetic sources. Naturally occurring sources include petroleum hydrocarbons such as white oil and wax. Being derived from petroleum, the hydrocarbon moiety is a mixture of different hydrocarbyl groups, the specific composition of which depends upon the particular oil stock which was used as a starting material. Suitable synthetic sources include various commercially available alkenes and alkane derivatives which, when reacted with the phenol, yield an alkylphenol. Suitable radicals obtained include butyl, hexyl, octyl, decyl, dodecyl, hexadecyl, eicosyl, triacontyl, and the like. Other suitable synthetic sources of the alkyl radical include olefin polymers such as polypropylene, polybutylene, polyisobutylene and the like.

The alkyl group of the alkyl phenate can be straight-chained or branched-chained, saturated or unsaturated (if unsaturated, preferably containing not more than 2 and generally not more than 1 site of olefinic unsaturation). The alkyl radicals will generally contain from 4 to 30 carbon atoms. Generally, when the phenol is monoalkyl substituted, the alkyl radical should contain at least 8 carbon atoms. The phenate may be sulfurized if desired. It may be either neutral or overbased and if overbased will have a base number of up to 200 to 300 mg of KOH per gram of sample or more. Mixtures of neutral and overbased phenates may be used.

The phenates are ordinarily present in the oil to provide from 0.2% to 27% by weight of the total composition. Preferably, the neutral phenates are present from 0.2% to 9% by weight of the total composition and the overbased phenates are present from 0.2% to 13% by weight of the total composition.

Most preferably, the overbased phenates are present from 0.2% to 5% by weight of the total composition. Preferred metals are calcium, magnesium, strontium or barium.

The sulfurized alkaline earth metal alkyl phenates are preferred. These salts are obtained by a variety of processes such as treating the neutralization product of an alkaline earth metal base and an alkylphenol with sulfur. Conveniently, the sulfur, in elemental form, is added to the neutralization product and reacted at elevated temperatures to produce the sulfurized alkaline earth metal alkyl phenate.

If more alkaline earth metal base was added during the neutralization reaction than was necessary to neutralize the phenol, a basic sulfurized alkaline earth metal alkyl phenate is obtained. See, for example, the process of Walker et al., U.S. Patent No. 2,680,096. Additional basicity can be obtained by adding carbon dioxide to the basic sulfurized alkaline earth metal alkyl phenate. The excess alkaline earth metal base can be added subsequent to the sulfurization step but is conveniently added at the same time as the alkaline earth metal base is added to neutralize the phenol.

Carbon dioxide and calcium hydroxide or oxide are the most commonly used material to produce the basic or "overbased" phenates. A process wherein basic sulfurized alkaline earth metal alkylphenates are produced by adding carbon dioxide is shown in Hanneman, U.S. Patent No. 3,178,368.

The Group II metal salts of dihydrocarbyl dithiophosphoric acids exhibit wear, antioxidant and thermal stability properties. Group II metal salts of phosphorodithioic acids have been described previously. See, for example, U.S. Patent No. 3,390,080, Columns 6 and 7, wherein these compounds and their preparation are described generally. Suitably, the Group II metal salts of the dihydrocarbyl dithiophosphoric acids useful in the lubricating oil composition of this invention contain from about 4 to about 18 carbon atoms in each of the hydrocarbyl radicals and may be the same or different and may be aromatic, alkyl or cycloalkyl. Preferred hydrocarbyl groups are alkyl groups containing from 4 to 8 carbon atoms and are represented by butyl, isobutyl, sec-butyl, hexyl, isohexyl, octyl, 2-ethylhexyl, p-tolyl, xylyl and the like. The metals suitable for forming these salts include barium, calcium, strontium, zinc and cadmium, of which zinc is preferred.

Preferably, the Group II metal salt of a dihydrocarbyl dithiophosphoric acid has the following formula:

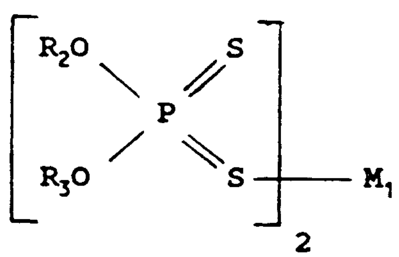

wherein $R_2$ and $R_3$ each independently represent hydrocarbyl radicals as described above, and $M_1$ represents a Group II metal cation as described above.

The dithiophosphoric salt is present in the lubricating oil compositions of this invention in an amount effective to inhibit wear and oxidation of the lubricating oil. The amount ranges from about 0.1% to about 4% by weight of the total composition, preferably the salt is present in an amount ranging from about 0.2% to about 2.5% by weight of the total lubricating oil composition. The final lubricating oil composition will ordinarily contain 0.025% to 0.25% by weight phosphorus and preferably 0.05% to 0.15% by weight.

The finished lubricating oil may be single or multigrade. Multigrade lubricating oils are prepared by adding viscosity index (VI) improvers. Typical viscosity index improvers are polyalkyl methacrylates, ethylene propylene copolymers, styrene-diene copolymers and the like. So-called decorated VI improvers having both viscosity index and dispersant properties are also suitable for use in the formulations of this invention.

The lubricating oil used in the compositions of this invention may be mineral oil or synthetic oils of lubricating viscosity and preferably suitable for use in the crankcase of an internal combustion engine. Crankcase lubricating oils ordinarily have a viscosity of about 1300 $mm^2s^{-1}$ (1300 cSt) at -18 °C (0 °F) to 22.7 $mm^2s^{-1}$ (22.7 cSt) at 99 °C (210 °F). The lubricating oils may be derived from synthetic or natural sources. Mineral oil for use as the base oil in this invention includes paraffinic, naphthenic and other oils that are ordinarily used in lubricating oil compositions. Synthetic oils include both hydrocarbon synthetic oils and synthetic esters. Useful synthetic hydrocarbon oils include liquid polymers of alpha olefins having the proper viscosity. Especially useful are the hydrogenated liquid oligomers of $C_6$-$C_{12}$ alpha olefins such as l-decene trimer. Likewise, alkyl benzenes of proper viscosity, such as didodecyl benzene, can be used.

Useful synthetic esters include the esters of both monocarboxylic acid and polycarboxylic acids as well as monohydroxy alkanols and polyols. Typical examples are didodecyl adipate, pentaerythritol tetracaproate, di-2-ethylhexyl adipate, dilaurylsebacate and the like. Complex esters prepared from mixtures of mono- and dicarboxylic acid and mono- and dihydroxy alkanols can also be used.

Blends of hydrocarbon oils with synthetic oils are also useful. For example, blends of 10 to 25 weight percent hydrogenated l-decene trimer with 75 to 90 weight percent 150 SUS at 38°C (100°F) mineral oil gives an excellent lubricating oil base.

Other additives which may be present in the formulation (or in the concentrate referred to above) include rust inhibitors, foam inhibitors, corrosion inhibitors, metal deactivators, pour point depressants, antioxidants, and a variety of other well-known additives.

The following examples are offered to specifically illustrate the invention. These examples and illustrations are not to be construed in any way as limiting the scope of the invention.

## EXAMPLES

### A. MONOALKYLAMINES

#### Example A1 -- Preparation of C18-C24 Alkyl Catechol by Batch Process

A 30-gallon (113.5 liters) reactor equipped with a stirrer, condenser, Dean-Stark trap, and nitrogen inlet and outlet, was charged with 61.67 pounds (28.03 kilograms) of $C_{18}$-$C_{24}$ olefins (less than $C_{14}$, 2.7%; $C_{14}$, 0.3%; $C_{16}$, 1.3%; $C_{18}$, 8.0%; $C_{20}$, 44.4%; $C_{22}$, 29.3%; $C_{24}$, 11.2%; $C_{26}$ and above, 2.8%) containing at least 40% branched olefins (available from Ethyl Corp.), 18.32 pounds (8.33 kilograms) catechol, 8.0 pounds (3.64 kilograms) sulfonic acid cation exchange resin (polystyrene cross-linked with divinylbenzene) catalyst (Amberlyst-15, available from Rohm and Haas, Philadelphia, PA), and 9 gallons (34.1 liters) of Chevron 350H thinner. With a stirrer set at 150 rpm, the reaction was carried out at 141°C-143°C for a total of 14.7 hours. The reaction mixture was stripped by heating at 143°C under vacuum (50 mm Hg (6.7kPa)) for 4 hours. The product was filtered hot over diatomaceous earth to afford 67.21 pounds (30.55 kilograms) of a liquid $C_{18}$-$C_{24}$ alkyl catechol. The product contained 1.4% of unreacted catechol by infrared analysis, a hydroxyl number of 199 mg KOH/g, and a low sediment level of 0.02 vol %. Chromatographic analysis showed the product to contain 2.6% of Chevron 350H thinner, 7.4% unreacted olefin, 45.2% monoalkyl catechols, and 44.8% dialkyl catechols.

#### Example A2 -- Boration of $C_{18}$-$C_{24}$ Alkyl Catechol

A 3-liter, three-necked, round-bottomed glass flask, equipped with a stirrer, condenser, Dean-Stark trap, and nitrogen inlet, was charged with 860 g of $C_{18}$-$C_{24}$ alkyl catechols prepared according to Example 1, 79.1 g boric acid, and 1200 ml toluene. The reaction mixture was heated under reflux, while stirring, at 115°C-125°C, collecting a total of 50 g of water in the trap in 6 hours. The reaction mixture was then stripped of solvent by heating at 135°C under vacuum (20-25 mm Hg) for 3 hours to give 850 g of a liquid, borated $C_{18}$-$C_{24}$ alkyl catechol. Analysis for boron gave a value of 1.3%, and a measured viscosity at 100°C of 27 cSt. Exposure of a small sample of product to atmospheric moisture, resulted in boric acid formation on the surface in a matter of seconds. In less than one day the material was hazy and crusted on top. This product was prepared using 3 moles of catechol per 2 moles of boron and the product is believed to have the structure shown in Formula V above.

#### Amine Treatment of Borated $C_{18}$-$C_{24}$ Alkyl Catechol

A series of runs were made wherein different monoalkylamines were complexed with the borated $C_{18}$-$C_{24}$ alkyl catechol prepared according to Example A2 above.

In each of these runs, which are summarized in Table A-I below, 10 to 100 g of the borated $C_{18}$-$C_{24}$ alkyl catechol prepared according to Example A2 above was added to a three-necked, round-bottomed glass flask, equipped with a stirrer, condenser, and an addition funnel.

While vigorously stirring, an equimolar amount of the corresponding monoalkylamine was added (1 mole N per 1 mole B) to the alkyl catechol over a period of 1 hour, maintaining a temperature during addition below 50°C. When amine addition was completed, the reaction mixture was stirred at 50°C for 1 hour, and then heated to 135°C under vacuum (20-25 mm Hg (2.7-3.3kPa)) for 1 hour to remove unreacted amine, and any toluene which may have been added to facilitate mixing and provide a better contact

between the reactants.

TABLE A-I

| Monoalkylamine Stabilized Borates | | | |
|---|---|---|---|
| Example No. | Amine | Borate[1] C:B | Hydrolytic[2] Stability Rating |
| A3 | 2-ethylhexylamine | 3:2 | 6 |
| A4 | cyclohexylamine | 3:2 | 6 |
| A5 | n-butylamine | 3:2 | 6 |
| A6 | ethylamine | 3:2 | 6 |
| A7 | hydroxyethylamine | 3:2 | 6 |
| A8 | methylamine | 3:2 | 1 |
| A9 | ammonia | 3:2 | 3 |
| A10 | benzylamine | 3:2 | 4 |

[1] Catechol to Boron mole ratio in preparing borate.
[2] 1 = Extensive, immediate hydrolysis.
2 = Some immediate hydrolysis.
3 = Hydrolysis within one day.
4 = Hydrolysis within one to three days.
5 = Hydrolysis within three to seven days.
6 = Stable to atmospheric moisture for at least seven days. Examples 3-7 were actually stable for more than six months.

Referring to Table A-I, Examples A3 to A7 used the monoalkylamines in accordance with this invention and were hydrolytically stable for at least seven days. Examples A8 and A10 used monoalkylamines which do not fit within the definition of the monoalkylamines of this invention and are unsuitable. Example A9 used ammonia which was also unsuitable.

## Oxidation Bench Tests

A series of oxidation bench tests were carried out which demonstrate the improvements in antioxidancy of additives prepared according to Examples A3 to A7.

The oxidation tests were carried out at 171 °C in a glass reactor and the time required for the sample to consume 1 liter of oxygen was recorded. The formulation contained 1% of additive to be tested, 3.5% of dispersant, 50 mmol/kg of sulfonate, 17 mmol/kg of zinc dialkyldithio-phosphates and 6.8% of viscosity index improver in Chevron IOON base oil. The oxidation test was carried out in the presence of metal catalysts normally found in used oil analysis such as Fe, Cu, Pb, Mn, and Cr (see U.S. Patent 2,883,412 or U.S. Patent 3,682,980). For comparison basis, a reference run was carried out under identical conditions using the same formulation, but containing no additive to be tested. The results are summarized in Table A-II.

TABLE A-II

| OXIDATOR B BENCH TEST PERFORMANCE RESULTS | | | | |
|---|---|---|---|---|
| EX. NO. | ADDITIVE | ADDITIVE CONC., WT% | OXYGEN UPTAKE HRS. TO 1L | HOURS IMPROV. |
| A11 | None | - | 12 | - |
| A12 | Ex. A3 | 1.0 | 16 | 4 |
| A13 | Ex. A4 | 1.0 | 17 | 5 |
| A14 | Ex. A5 | 1.0 | 17 | 5 |
| A15 | Ex. A6 | 1.0 | 18 | 6 |
| A16 | Ex. A7 | 1.0 | 18 | 6 |

Referring to Table A-II above, a reference run (Example A11), without an antioxidant, required 12 hours for the sample to take up one liter of oxygen. Adding as little as 1% of the borated, and primary amine stabilized, additives of this invention (Examples A12 to A16) led to a substantial improvement in oxidative stability of the formulated oil blend by a factor of 4 to 6 hours, demonstrating the effectiveness of additives of this invention to function as antioxidants.

B. DIALKYLAMINES

Example B1 -- Preparation of $C_{18}$-$C_{24}$ Alkyl Catechol by Batch Process

A 30-gallon reactor (113.5 liters) equipped with a stirrer, condenser, Dean-Stark trap, and nitrogen inlet and outlet, was charged with 61.67 pounds (28.03 kilograms) of $C_{18}$-$C_{24}$ olefins (less than $C_{14}$, 2.7%; $C_{14}$, 0.3%; $C_{16}$, 1.3%; $C_{18}$, 8.0%; $C_{20}$, 44.4%; $C_{22}$, 29.3%; $C_{24}$, 11.2%; $C_{26}$ and above, 2.8%) containing at least 40% branched olefins (available from Ethyl Corp.), 18.32 pounds (8.33 kilograms) catechol, 8.0 pounds (3.64 kilograms) sulfonic acid cation exchange resin (polystyrene cross-linked with divinylbenzene) catalyst (Amberlyst-15, available from Rohm and Haas, Philadelphia, PA), and 9 gallons (34.1 liters) of Chevron 350H thinner. With a stirrer set at 150 rpm, the reaction was carried out at 141°C-143°C for a total of 14.7 hours. The reaction mixture was stripped by heating at 143°C under vacuum (50 mm Hg (6.7kPa)) for 4 hours. The product was filtered hot over diatomaceous earth to afford 67.21 pounds (30.55 kilograms) of a liquid $C_{18}$-$C_{24}$ alkyl catechol. The product contained 1.4% of unreacted catechol by infrared analysis, a hydroxyl number of 199 mg KOH/g, and a low sediment level of 0.02 vol %. Chromatographic analysis showed the product to contain 2.6% of Chevron 350H thinner, 7.4% unreacted olefin, 45.2% monoalkyl catechols, and 44.8% dialkyl catechols.

Example B2 -- Boration of C18-C24 Alkyl Catechol

A 3-liter, three-necked, round-bottomed glass flask, equipped with a stirrer, condenser, Dean-Stark trap, and nitrogen inlet, was charged with 860 g of $C_{18}$-$C_{24}$ alkyl catechols prepared according to Example B1, 79.1 g boric acid, and 1200 ml toluene. The reaction mixture was heated under reflux, while stirring, at 115°C-125°C, collecting a total of 50 g of water in the trap in 6 hours. The reaction mixture was then stripped of solvent by heating at 135°C under vacuum (20-25 mm Hg (2.7-3.3kPa)) for 3 hours to give 850 g of a liquid, borated $C_{18}$-$C_{24}$ alkyl catechol. Analysis for boron gave a value of 1.3%, and a measured viscosity at 100°C of 27 cSt ($mm^2/s$). Exposure of a small sample of product to atmospheric moisture, resulted in boric acid formation on the surface in a matter of seconds. In less than one day the material was hazy and crusted on top. This product was prepared using 3 moles of catechol per 2 moles of boron and the product is believed to have the structure shown in Formula V above.

Amine Treatment of Borated $C_{18}$-$C_{24}$ Alkyl Catechol

A series of runs were made wherein different dialkylamines were complexed with the borated $C_{18}$-$C_{24}$ alkyl catechol prepared according to Example B2 above.

In each of these runs, which are summarized in Table B-I below, 10 to 100 g of the borated $C_{18}$-$C_{24}$ alkyl catechol prepared according to Example B2 above was added to a three-necked, round-bottomed glass flask, equipped with a stirrer, condenser, and an addition funnel.

While vigorously stirring, an equimolar amount of the corresponding dialkylamine was added (1 mole N per 1 mole B) to the alkyl catechol over a period of 1 hour, maintaining a temperature during addition below 50°C. When amine addition was completed, the reaction mixture was stirred at 50°C for 1 hour, and then heated to 135°C under vacuum (20-25 mm Hg (2.7-3.3kPa)) for 1 hour to remove unreacted amine, and any toluene solvent when such was optionally employed to obtain better mixing and contact between the reactants.

TABLE B-I

| Dialkylamine Stabilized Borates | | | |
|---|---|---|---|
| Example. No. | Amine | Borate[3] C:B | Hydrolytic[4] Stability Rating |
| B3 | dihexylamine | 3:2 | 6 |
| B4 | dicyclohexylamine | 3:2 | 6 |
| B5 | ethylbenzylamine | 3:2 | 6 |
| B6 | diisopropylamine | 3:2 | 3 |
| B7 | dimethylamine | 3:2 | 1 |
| B8 | methylbutylamine | 3:2 | 6 |
| B9 | dibenzylamine | 3:2 | 6 |

[3] Catechol to Boron mole ratio in preparing borate.
[4] 1 = Extensive, immediate hydrolysis.
2 = Some immediate hydrolysis.
3 = Hydrolysis within one day.
4 = Hydrolysis within one to three days.
5 = Hydrolysis within three to seven days.
6 = Stable to atmospheric moisture for at least seven days. Examples B3, B4, B5, B8 and B9 were stable for more than six months.

Referring to Table B-I, Examples B3, B4, B5, B8 and B9 used the dialkylamines in accordance with this invention and were hydrolytically stable for at least seven days. Examples B6 and B7 used dialkylamines which do not fit within the definition of the dialkylamines of this invention and are unsuitable.

Earlier in our work, it was discovered that alkylcatechols prepared according to Example B1 have shown catastrophic failure in the wear part of the Sequence IIID engine test. These disappointing results have led us to use borated alkylcatechols of Example B2 which pass the Sequence IIID test. More recently, diethylamine stabilized borated alkylcatechols of Example B2 also passed the Sequence IIID engine tests on both the wear and the oxidation part of the test. It was also found that a correlation exists between Sequence IIID engine tests and the oxidation bench test which was found to be very reliable, easy to carry out, and is relatively inexpensive. This test was therefore used to evaluate additives of current interest and is described below.

## Oxidation Bench Tests

A series of oxidation bench tests were carried out which demonstrate the improvements in antioxidancy of additives prepared according to Examples B3-B9.

The oxidation tests were carried out at 171 °C in a glass reactor and the time required for the sample to consume 1 liter of oxygen was recorded. The formulation contained 1% of additive to be tested, 3.5% of dispersant, 50 mmol/kg of sulfonate, 17 mmol/kg of zinc dialkyldithio-phosphate, and 6.8% of viscosity index improver in Chevron 100N base oil. The oxidation test was carried out in the presence of metal catalysts normally found in used oil analysis such as Fe, Cu, Pb, Mn, and Cr (see U.S. Patent 2,883,412 or U.S. Patent 3,682,980). For comparison basis, a reference run was carried out under identical conditions using the same formulation, but containing no additive to be tested. The results are summarized in Table B-II.

TABLE B-II

| OXIDATOR B BENCH TEST PERFORMANCE RESULTS | | | | |
|---|---|---|---|---|
| EX. NO. | ADDITIVE | ADDITIVE CONC. WT % | OXYGEN UPTAKE HRS. TO 1L | HOURS IMPROV. |
| B10 | Reference | 0 | 12 | -- |
| B11 | Example B1 | 1 | 13 | 1 |
| B12 | Example B2 | 1 | 22 | 10 |
| B13 | Example B2 | 1 | 23 | 11 |
| B14 | Diethylamine Treated Ex. B12 | 1 | 20 | 8 |
| B15 | Diethylamine Treated Ex. B13 | 1 | 25 | 13 |
| B16 | Example B3 | 1 | 19 | 7 |
| B17 | Example B4 | 1 | 17 | 5 |
| B18 | Example B8 | 1 | 19 | 7 |
| B19 | Example B9 | 1 | 17 | 5 |

Referring to Table B-II, the reference oil of Example B10 required about 12 hours to consume 1 liter of oxygen. Addition of 1% of alkylcatechol of Example B1 in Example B11 did not change the result significantly. This oil in fact failed the Sequence IIID engine test. When the product of Example B2 was used in Examples B12 and B13, both oils showed considerable improvement in oxidation stability, and both oils passed the Sequence IIID tests. In Example B12, the additive of Example B2 was used which was prepared from a 3:2 molar ratio of alkylcatechol to boric acid, while in Example B13, the product was prepared as in Example B2, but using a 1:1 molar ratio of reactants. It is evident that boration significantly improved the oxidation stability. Examples B14 and B15 employed diethylamine stabilized products of Examples B12 and B13. These runs show that the most important ingredient in improving oxidation stability is incorporation of boron; stabilization with amines, assuming that a stable complex can be formed, will afford little, if any, additional benefit to stability of the base oil. Examples B16 and B17 employed the additives of Examples B3 and B4 and both showed improvement in oxidation stability, and were therefore expected to pass Sequence IIID tests. The improvement in stability in Examples B16 and B17 appeared to be less than that in Examples B14 and B15, but this is because higher molecular weight amines were used in Examples B16 and B17 which in effect lowered the boron content of the final blend when compared to Examples B14 and B15. Therefore, more appropriately, comparison of additives should be done on the basis of the boron content rather than on weight % of additive. Examples B18 and B19 used methylbutylamine and dibenzylamine as stabilizing amines, respectively. As the data show, both additives showed improvement in oxidation stability over the reference run (Example B10).

TRIALKYLAMINES

Example C1 --Preparation of C18-C24 Alkyl Catechol by Batch Process

A 100-gallon (378.4 liters) reactor equipped with a stirrer, condenser, Dean-Stark trap, and nitrogen inlet and outlet, was charged with 115 pounds (52.3 kilograms) of $C_{18}$-$C_{24}$ olefins (less than $C_{14}$, 2.7%; $C_{14}$, 0.3%; $C_{16}$, 1.3%; $C_{18}$, 8.0%; $C_{20}$, 44.4%; $C_{22}$, 29.3% $C_{24}$, 11.2%; $C_{26}$ and above, 2.8%) containing at least 40% branched olefins (available from Ethyl Corp.), 80.4 pounds (36.6 kilograms) catechol, 19.6 pounds (8.9 kilograms) sulfonic acid cation exchange resin (polystyrene cross-linked with divinylbenzene) catalyst (Amberlyst-15, available from Rohm and Haas, Philadelphia, PA), and 24 gallons of Chevron 350H thinner. With a stirrer set at 150 rpm, the reaction was carried out at 141°C-143°C for a total of 15 hours. The reaction mixture was stripped by heating at 140°C under vacuum (50 mm Hg (6.7kPa)) for 8 hours. The product was filtered hot over diatomaceous earth to afford 139.7 pounds (63.5 kilograms) of a liquid $C_{18}$-$C_{24}$ alkyl catechol. The product contained 1.4% of unreacted catechol by infrared analysis, a hydroxyl number of 229 mg KOH/g, and a low sediment level of 0.02 vol %. The product had a density of 0.88 g/ml at room temperature, and 100°C viscosity of 13.44$mm^2s^{-1}$ (13.44 cSt).

Example C2 -- Boration of C18-C24 Alkyl Catechol

A 20-gallon (75.7 liter) reactor, equipped with a stirrer, condenser, Dean-Stark trap, and nitrogen inlet and outlet, was charged with 38.7 pounds (17.6 kilograms) of $C_{18}$-$C_{24}$ alkyl catechols prepared according to Example C1, 3.28 pounds (1.49 kilograms) boric acid, and 4 gallons (15.1 liters) 250 Chevron thinner. The reaction mixture was heated under reflux, while stirring, at 115 °C to 125 °C, until water stopped being formed in the trap (6 hours). The reaction mixture was then stripped of solvent by heating at 135 °C under vacuum (50 mm Hg (6.7kPa)) for 6 hours to give 37.6 pounds (17.1 kilograms) of a liquid, borated $C_{18}$-$C_{24}$ alkyl catechol. Analysis for boron gave a value of 1.3%, a measured viscosity at 100 °C of 28.2 cSt, and a density of 0.928 g/ml at room temperature. Exposure of a small sample of product to atmospheric moisture resulted in boric acid formation on the surface in a matter of seconds. In less than one day the material was hazy and crusted on top. This product was prepared using 3 moles of catechol per 2 moles of boron and the product is believed to have the structure shown in Formula V above.

Amine Treatment of Borated $C_{18}$-$C_{24}$ Alkyl Catechol

A series of runs were made wherein different trialkylamines were complexed with the borated $C_{18}$-$C_{24}$ alkyl catechol prepared according to Example C2 above. In each of these runs, which are summarized in Table C-I below, 10 to 100 g of the borated $C_{18}$-$C_{24}$ alkyl catechol prepared according to Example C2 above was added to a three-necked, round-bottomed glass flask, equipped with a stirrer, condenser, and an addition funnel.

While vigorously stirring, an equimolar amount of the corresponding trialkylamine was added (1 mole N per 1 mole B) to the alkyl catechol (20-25% as concentration in toluene) over a period of 1 hour, maintaining a temperature during addition below 50 °C. When amine addition was completed, the reaction mixture was stirred at 50 °C for 1 hour, and then heated to 135 °C under vacuum (20-25 mm Hg (2.7-3.3kPa)) for 1 hour to remove unreacted amine and solvent.

TABLE C-I

| Trialkylamine Stabilized Borates | | | |
|---|---|---|---|
| Example No. | Amine | Borate[5] C:B | Hydrolytic[6] Stability Rating |
| C3 | trihexylamine | 3:2 | 6 |
| C4 | triethylamine | 3:2 | 6 |
| C5 | triisopropanolamine | 3:2 | 6 |
| C6 | triethanolamine | 3:2 | 6 |
| C7[7] | triethylamine | 1:1 | 4 (Comparison) |

[5] Catechol to Boron mole ratio in preparing borate.
[6] 1 = Extensive, immediate hydrolysis.
2 = Some immediate hydrolysis.
3 = Hydrolysis within one day.
4 = Hydrolysis within one to three days.
5 = Hydrolysis within three to seven days.
6 = Stable to atmospheric moisture for at least seven days. Examples C3, C4, C5, and C6 were stable for more than six months.
[7] This product is a 1:1 catechol to boron product which was prepared in a manner similar to Example C2, except the amount of boron was sufficient to make the 1:1 product.

Referring to Table C-I, Examples C3, C4, C5 and C6 used the trialkylamines in accordance with this invention, i.e., with the 3:2 product and were hydrolytically stable for at least seven days. Example C7 shows a trialkylamine with a 1:1 product which is not stabilized.

Diesel Engine Examples

A series of examples were carried out which demonstrate the improvements in deposit control in a diesel engine by adding the additive prepared according to Example C4 above.

The diesel engine runs were carried out in a single cylinder Caterpillar engine for a period of 60 hours according to 1G2 specification, using a formulation containing a diesel deposit inhibitor of Example C4, 8% dispersant, 50 mmol/kg calcium phenate, 16 mmol/kg mixed zinc dialkyldithio-phosphate, and 10% viscosity index improver (ethylene propylene copolymer) in Chevron 100N/240N base oil. For comparison purposes, reference runs were carried out under identical conditions, in the same engine stand, using the above formulation, but without the deposit inhibitor of Example C4. In addition, runs were conducted using the above form-ulation, but using the 1:1 borated alkyl catechol of Example C7 (Comparison) in place of the deposit inhibitor of Example C4. The results are shown in Table C-II.

**TABLE C-II**

**1G2 DIESEL ENGINE TEST RESULTS**

| EX. No. | Additive | Additive Conc. Wt. % | TGF[8] | WTD[9] | |
|---|---|---|---|---|---|
| * | | | | | |
| C9 | None | Ref. | 8 | 528 | |
| C10 | None | Ref. | 81 | 383 | |
| C11 | None | Ref. | 69 | 340 | |
| C12 | None | Ref. | 74 | 524 | |
| C13 | None | Ref. | 74 | 378 | |
| C14 | None | Ref. | 58 | 359 | |
| | | avg | 74(10)** | 419 (85)** | |
| C15 | Ex. C4 | 2.0 | 48 | 225 | |
| C16 | Ex. C4 | 2.0 | 41 | 247 | |
| | | avg | 45 (5)** | 236 (16)** | |
| C17 | Ex. C7 | 2.0 | 38 | 269 | Comparison |
| C18 | Ex. C7 | 2.0 | 68 | 375 | |
| | | avg | 53 (21) | 322 (75) | |

* There is no Example C8 in these examples.
** Standard deviation.
[8] TGF = top groove fill.
[9] WTD = weighted total demerits.

Referring to Table C-II, six reference runs (Examples C9 through C14) were made to obtain a statistically meaningful base average for TGF and WTD.

A comparison of Examples C15 through C16 with the average of Examples C9 through C14 shows that using the stabilized 3:2 borated alkyl catechol of this invention improves the deposit control properties of the lubricating oil. Examples C17 through C18 show that the 1:1 catechol to boron complex of Example 7 also improves the deposit control properties of the lubricating oil. As shown in Table C-I, however, the 1:1 catechol to boron complex of Example C7 is not hydrolytically stable.

For example, it is within the purview of the present invention to use the defined amines to stabilize a borated alkyl catechol which has been partially stabilized with some other stabilizing agent such as a succinimide or, perhaps, another amine.

## Claims

**1.** A hydrolytically stable borated alkyl catechol-amine complex comprising

a) a borated alkyl catechol having a alkyl catechol to boron mole ratio of 3:2 and wherein said alkyl group of said alkyl catechol is an alkyl group of at least 10 carbon atoms; and

b) an amount to hydrolytically stabilize the borated alkyl catechol of an amine selected from the group consisting of

i) one or more monoalkylamines of the formula:

$H_2N{-}R^i$

where $R^i$ is an aliphatic hydrocarbon radical of from 2 to 10 carbon atoms optionally containing from one to three hydroxyl groups, or an alicyclic hydrocarbon radical having 5 or 6 carbon atoms;

ii) one or more dialkylamines of the formula:

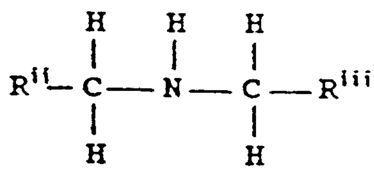

where $R^{ii}$ is phenyl or an aliphatic hydrocarbon radical having from 2 to 9 carbon atoms and $R^{iii}$ is selected from the group consisting of hydrogen, phenyl and an aliphatic hydrocarbon radical having from 1 to 9 carbon atoms and wherein said aliphatic carbon atoms of $R^{ii}$ and/or $R^{iii}$ can optionally form a 5- or 6-membered alicyclic ring with the alpha carbon atom; and wherein the total number of carbon atoms in $R^{ii}$ plus $R^{iii}$ is no more than 16;

iii) one or more trialkylamines of the formula:

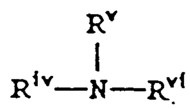

where $R^{iv}$, $R^v$ and $R^{vi}$ can be the same or different and be an aliphatic hydrocarbon radical having from 1 to 9 carbon atoms; or an alicyclic hydrocarbon radical having 5 or 6 carbon atoms; and each of $R^{iv}$, $R^v$ and $R^{vi}$ optionally contains from one to three hydroxyl groups; and

d) mixtures of i), ii) and iii).

**2.** The complex according to Claim 1 wherein said amine is one or more monoalkylamines of the formula:

$H_2N{-}R^i$

where $R^i$ is an aliphatic hydrocarbon radical of from 2 to 10 carbon atoms optionally containing from one to three hydroxyl groups, or an alicyclic hydrocarbon radical having 5 or 6 carbon atoms.

**3.** The complex according to Claim 1 wherein said amine is one or more dialkylamines of the formula:

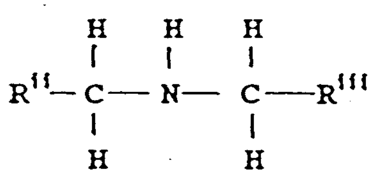

where $R^{ii}$ is phenyl or an aliphatic hydrocarbon radical having from 2 to 9 carbon atoms and $R^{iii}$ is selected from the group consisting of hydrogen, phenyl and an aliphatic hydrocarbon radical having from 1 to 9 carbon atoms and wherein said aliphatic carbon atoms of $R^{ii}$ and/or $R^{iii}$ can optionally form a 5- or 6-membered alicyclic ring with the alpha carbon atom; and wherein the total number of carbon atoms in $R^{ii}$ plus $R^{iii}$ is no more than 16.

4. The complex according to Claim 1 wherein said amine is one or more trialkylamine of the formula:

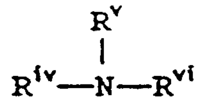

wherein $R^{iv}$, $R^{v}$ and $R^{vi}$ can be the same or different and be an aliphatic hydrocarbon radical having from 1 to 9 carbon atoms; or an alicyclic hydrocarbon radical having 5 or 6 carbon atoms; and each of $R^{iv}$, $R^{v}$ and $R^{vi}$ optionally contains from one to three hydroxyl groups and further wherein said borated alkyl catechol has a 2:3 mole ratio of boron to alkyl catechol.

5. The complex according to any of Claims 2, 3 and 4 wherein the amount of amine is at least about 0.8 moles of amine per mole of boron.

6. The complex according to any of Claims 2, 3 and 4 wherein the molar ratio of amine to boron is about 0.8 to about 1.1.

7. The complex according to any of Claims 2, 3 and 4 wherein the alkyl group of said borated alkyl catechol contains from 10 to 30 carbon atoms.

8. The complex according to Claim 7 wherein said alkyl group of said borated alkyl catechol is a mixture of alkyl groups containing 18 to 24 carbon atoms.

9. The complex according to Claim 7 wherein said alkyl group of said borated alkyl catechol is a mixture of alkyl groups containing 20 to 24 carbon atoms.

10. The complex according to Claim 9 wherein the molar ratio of dialkylamine to boron is about 1:1.

11. The complex according to any of Claims 2, 3 and 4 wherein the borated alkyl catechol has from one to two alkyl groups and each alkyl group has from 10 to 30 carbon atoms.

12. The complex according to Claim 2 wherein the monoalkylamine is selected from the group consisting of 2-ethylhexylamine; cyclohexylamine; ethylamine; n-butylamine; and hydroxyethylamine.

13. The complex according to Claim 3 wherein the dialkylamine is selected from the group consisting of dihexylamine; dicyclohexylamine; arid ethylbenzylamine.

14. The complex according to Claim 4 wherein the trialkylamine is selected from the group consisting of trihexylamine; triethylamine; triethanolamine and triisopropanolamine.

15. A method to hydrolytically stabilize a borated alkyl catechol as defined in claim 1, said method comprising contacting said borated alkyl catechol with a hydrolytically stabilizing amount of an amine as `defined in Claim 1 under conditions wherein a complex is formed between said amine and said borated alkyl catechol.

16. A method according to Claim 15 wherein said amine is one or more monoalkylamines of the formula:

$H_2N{-}R^{i}$

where $R^{i}$ is an aliphatic hydrocarbon radical of from 2 to 10 carbon atoms optionally containing from one to three hydroxyl groups, or an alicyclic hydrocarbon radical having 5 or 6 carbon atoms;

**17.** A method according to Claim 15 wherein said amine is one or more dialkylamines of the formula:

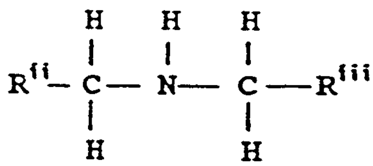

where $R^{ii}$ is phenyl or an aliphatic hydrocarbon radical having from 2 to 9 carbon atoms and $R^{iii}$ is selected from the group consisting of hydrogen, phenyl and an aliphatic hydrocarbon radical having from 1 to 9 carbon atoms and wherein said aliphatic carbon atoms of $R^{ii}$ and/or $R^{iii}$ can optionally form a 5- or 6-membered alicyclic ring with the alpha carbon atom; and wherein the total number of carbon atoms in $R^{ii}$ plus $R^{iii}$ is no more than 16.

**18.** A method according to Claim 15 wherein said amine is one or more trialkylamines of the formula:

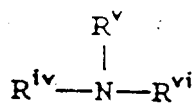

wherein $R^{iv}$, $R^{v}$ and $R^{vi}$ can be the same or different and be an aliphatic hydrocarbon radical having from 1 to 9 carbon atoms; or an alicyclic hydrocarbon radical having 5 or 6 carbon atoms; and each of $R^{iv,}$ $R^{v}$ and $R^{vi}$ optionally contains from one to three hydroxyl groups and further wherein said borated alkyl catechol has a 2:3 mole ratio of boron to alkyl catechol.

**19.** A method according to any of Claims 16,17 and 18 wherein the alkyl group of said borated alkyl catechol contains from 10 to 30 carbon atoms; and the amount of amine is such that the mole ratio of amine to boron is 0.8 to 1.1.

**20.** A method according to any of Claims 16,17 and 18 wherein said complex is formed in the presence of a solvent and a temperature of from 30 °C to 100 °C.

**21.** A lubricating oil composition comprising a major amount of an oil of lubricating viscosity and a minor amount of the hydrolytically stable borated alkyl catechol-amine complex of any of claims 1-14.

**22.** A lubricating oil composition according to Claim 21 wherein the amount of said complex is from 0.05 percent to 20 percent by weight of said composition.

**23.** A lubricating oil concentrate comprising a neutral carrier oil and from about 5 to about 80 weight percent of a hydrolytically stable borated alkyl catechol-amine complex as defined in any of claims 1-14.

**Patentansprüche**

**1.** Hydrolytisch stabiler borierter Alkylkatechin-Aminkomplex, umfassend:

a) ein boriertes Alkylkatechin in einem Alkylkatechin zu Bor/Molverhältnis von 3:2, wobei die Alkylgruppe des Alkylkatechins eine Alkylgruppe mit wenigstens 10 Kohlenstoffatomen ist, und

b) eine Menge, um das borierte Alkylkatechin hydrolytisch zu stabilisieren, an einem Amin ausgewählt aus der Gruppe bestehend aus

i) einem oder mehreren Monoalkylaminen der Formel

$H_2N - R^i$

worin $R^i$ ein aliphatischer Kohlenwasserstoffrest von 2 bis 10 KoHlenstoffatomen ist, der gegebenenfalls eine bis drei Hydroxylgruppen enthält, oder ein alicyclischer Kohlenwasserstoffrest ist,

der 5 oder 6 Kohlenstoffatome aufweist;
ii) einem oder mehreren Dialkylaminen der Formel

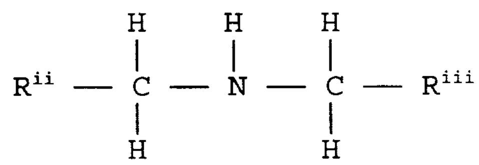

worin $R^{ii}$ Phenyl oder ein aliphatischer Kohlenwasserstoffrest mit 2 bis 9 Kohlenstoffatomen ist und $R^{iii}$ ausgewählt ist aus der Gruppe bestehend aus Wasserstoff, Phenyl und einem aliphatischen Kohlenwasserstoffrest mit 1 bis 9 Kohlenstoffatomen, und worin die aliphatischen Kohlenstoffatome von $R^{ii}$ und/oder $R^{iii}$ gegebenenfalls einen 5- oder 6-gliedrigen alicyclischen Ring mit dem alpha-Kohlenstoffatom bilden können, und worin die Gesamtzahl der Kohlenstoffatome in $R^{ii}$ plus $R^{iii}$ nicht mehr als 16 ist,
iii) einem oder mehreren Trialkylaminen der Formel

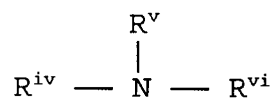

worin $R^{iv}$, $R^{v}$ und $R^{vi}$ gleich oder verschieden sein können und ein aliphatischer Kohlenwasserstoffrest mit 1 bis 9 Kohlenstoffatomen oder ein alicyclischer Kohlenwasserstoffrest mit 5 oder 6 Kohlenstoffatomen sein können und jeder der Reste $R^{iv}$, $R^{v}$ und $R^{vi}$ gegebenenfalls eine bis drei Hydroxylgruppen aufweist, und

d) Gemischen von i), ii) und iii).

**2.** Komplex nach Anspruch 1, dadurch gekennzeichnet, daß das Amin eines oder mehrere Monoalkylamine der Formel

$H_2N - R^{i}$

ist, worin $R^{i}$ ein aliphatischer Kohlenwasserstoffrest mit 2 bis 10 Kohlenstoffatomen ist, der gegebenenfalls eine bis drei Hydroxylgruppen enthält, oder ein alicyclischer Kohlenwasserstoffrest mit 5 oder 6 Kohlenstoffatomen.

**3.** Komplex nach Anspruch 1, dadurch gekennzeichnet, daß das Amin eines oder mehrere Dialkylamine mit der Formel

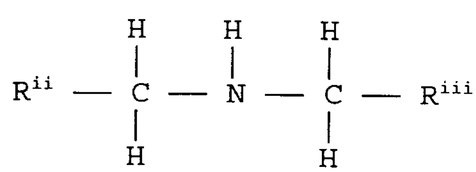

ist, worin $R^{ii}$ Phenyl oder ein aliphatischer Kohlenwasserstoffrest mit 2 bis 9 Kohlenstoffatomen ist und $R^{iii}$ ausgewählt ist aus der Gruppe bestehend aus Wasserstoff, Phenyl und einem aliphatischen Kohlenwasserstoffrest mit 1 bis 9 Kohlenstoffatomen, und worin diese aliphatischen Kohlenstoffatome von $R^{ii}$ und/oder $R^{iii}$ gegebenenfalls einen 5- oder 6-gliedrigen alicylischen Ring mit dem alpha-Kohlenstoffatom bilden können, und worin die Gesamtzahl der Kohlenstoffatome in $R^{ii}$ plus $R^{iii}$ nicht mehr als 16 beträgt.

**4.** Komplex nach Anspruch 1, dadurch gekennzeichnet, daß das Amin eines oder mehrere Trialkylamine der Formel

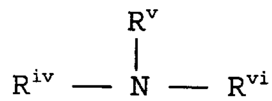

ist, worin $R^{iv}$, $R^{v}$ und $R^{vi}$ gleich oder verschieden sein können und ein aliphatischer Kohlenwasserstoffrest mit 1 bis 9 Kohlenstoffatomen oder ein alicyclischer Kohlenwasserstoffrest mit 5 oder 6 Kohlenstoffatomen sein können und jeder der Reste $R^{iv}$, $R^{v}$ und $R^{vi}$ gegebenenfalls eine bis drei Hydroxylgruppen enthält, und worin weiter das borierte Alkylkatechin ein Molverhältnis von Bor zu Alkylkatechin von 2:3 hat.

**5.** Komplex nach irgendeinem der Ansprüche 2, 3 und 4, dadurch gekennzeichnet, daß die Menge an Amin wenigstens etwa 0,8 Mol Amin pro Mol Bor beträgt.

**6.** Komplex nach irgendeinem der Ansprüche 2, 3 und 4, dadurch gekennzeichnet, daß das molare Verhältnis von Amin zu Bor etwa 0,8 bis etwa 1,1 beträgt.

**7.** Komplex nach irgendeinem der Ansprüche 2, 3 und 4, dadurch gekennzeichnet, daß die Alkylgruppe des borierten Alkylkatechins von 10 bis 30 Kohlenstoffatome enthält.

**8.** Komplex nach Anspruch 7, dadurch gekennzeichnet, daß die Alkylgruppe des borierten Alkylkatechins ein Gemisch von Alkylgruppen mit 18 bis 24 Kohlenstoffatomen ist.

**9.** Komplex nach Anspruch 7, dadurch gekennzeichnet, daß die Alkylgruppe des borierten Alkylkatechins ein Gemisch von Alkylgruppen mit 20 bis 24 Kohlenstoffatomen ist.

**10.** Komplex nach Anspruch 9, dadurch gekennzeichnet, daß das molare Verhältnis von Dialkylamin zu Bor etwa 1:1 beträgt.

**11.** Komplex nach irgendeinem der Ansprüche 2, 3 und 4, dadurch gekennzeichnet, daß das borierte Alkylkatechin eine bis zwei Alkylgruppen hat und jede Alkylgruppe 10 bis 30 Kohlenstoffatome aufweist.

**12.** Komplex nach Anspruch 2, dadurch gekennzeichnet, daß das Monoalkylamin ausgewählt ist aus der Gruppe bestehend aus 2-Ethylhexylamin, Cyclohexylamin, Ethylamin, n-Butylamin und Hydroxyethylamin.

**13.** Komplex nach Anspruch 3, dadurch gekennzeichnet, daß das Dialkylamin ausgewählt ist aus der Gruppe bestehend aus Dihexylamin, Dicylohexylamin und Ethylbenzylamin.

**14.** Komplex nach Anspruch 4, dadurch gekennzeichnet, daß das Trialkylamin ausgewählt ist aus der Gruppe bestehend aus Trihexylamin, Triethylamin, Triethanolamin und Triisopropanolamin.

**15.** Verfahren zur hydrolytischen Stabilisierung eines borierten Alkylkatechins, wie definiert in Anspruch 1, dadurch gekennzeichnet, daß man dieses borierte Alkylkatechin mit einer hydrolytisch stabilisierenden Menge eines Amins, wie definiert in Anspruch 1, unter Bedingungen in Kontakt bringt unter denen ein Komplex zwischen diesem Amin und dem borierten Alkylkatechin gebildet wird.

**16.** Verfahren nach Anspruch 15, dadurch gekennzeichnet, daß das Amin eines oder mehrere Monoalkylamine der Formel

$H_2N - R^i$

ist, worin $R^i$ ein aliphatischer Kohlenwasserstoffrest mit 2 bis 10 Kohlenstoffatomen ist, der gegebenenfalls eine bis drei Hydroxylgruppen enthält, oder ein alicyclischer Kohlenwasserstoffrest mit 5 oder 6

Kohlenstoffatomen.

**17.** Verfahren nach Anspruch 15, dadurch gekennzeichnet, daß das Amin eines oder mehrere Dialkylamine mit der Formel

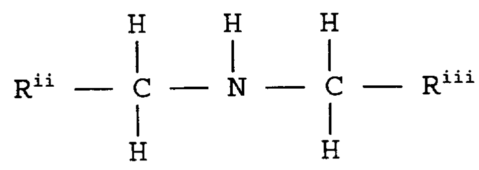

ist, worin $R^{ii}$ Phenyl oder ein aliphatischer Kohlenwasserstoffrest mit 2 bis 9 Kohlenstoffatomen ist und $R^{iii}$ ausgewählt ist aus der Gruppe bestehend aus Wasserstoff, Phenyl und einem aliphatischen Kohlenwasserstoffrest mit 1 bis 9 Kohlenstoffatomen, und worin diese aliphatischen Kohlenstoffatome von $R^{ii}$ und/oder $R^{iii}$ gegebenenfalls einen 5- oder 6-gliedrigen alicylischen Ring mit dem alpha-Kohlenstoffatom bilden können, und worin die Gesamtzahl der Kohlenstoffatome in $R^{ii}$ plus $R^{iii}$ nicht mehr als 16 beträgt.

**18.** Verfahren nach Anspruch 15, dadurch gekennzeichnet, daß das Amin eines oder mehrere Trialkylamine der Formel

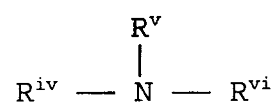

ist, worin $R^{iv}$, $R^{v}$ und $R^{vi}$ gleich oder verschieden sein können und ein aliphatischer Kohlenwasserstoffrest mit 1 bis 9 Kohlenstoffatomen oder ein alicyclischer Kohlenwasserstoffrest mit 5 oder 6 Kohlenstoffatomen sein können und jeder der Reste $R^{iv}$, $R^{v}$ und $R^{vi}$ gegebenenfalls eine bis drei Hydroxylgruppen enthält, und worin weiter das borierte Alkylkatechin ein Molverhältnis von Bor zu Alkylkatechin von 2:3 hat.

**19.** Verfahren nach irgendeinem der Ansprüche 16, 17 und 18, dadurch gekennzeichnet, daß die Alkylgruppe des borierten Alkylkatechins 10 bis 30 Kohlenstoffatome enthält und die Menge des Amins so ist, daß das Molverhältnis von Amin zu Bor 0,8 bis 1,1 beträgt.

**20.** Verfahren nach irgendeinem der Ansprüche 16, 17 und 18, dadurch gekennzeichnet, daß der Komplex in Gegenwart eines Lösungsmittels und bei einer Temperatur von 30 °C bis 100 °C gebildet wird.

**21.** Schmierölzusammensetzung enthalten eine größere Menge eines Öls von Schmierviskosität und eine kleinere Menge des hydrolytisch stabilen borierten Alkylkatechin-Aminkomplexes nach irgendeinem der Ansprüche 1 bis 14.

**22.** Schmierölzusammensetzung nach Anspruch 21, dadurch gekennzeichnet, daß die Menge des Komplexes 0,05 bis 20 Gew.-% dieser Zusammensetzung beträgt.

**23.** Schmierölkonzentrat enthaltend ein neutrales Trägeröl und etwa 5 bis 80 Gew.-% eines hydrolytisch stabilen borierten Alkylkatechin-Aminkomplexes gemäß irgendeinem der Ansprüche 1 bis 14.

## Revendications

**1.** Complexe alkylcatéchol boraté-amine, stable à l'hydrolyse, comprenant

a) un alkylcatéchol boraté ayant un rapport molaire de l'alkylcatéchol au bore égal à 3:2 et dans lequel ledit groupe alkyle dudit alkylcatéchol est un groupe alkyle ayant au moins 10 atomes de carbone ; et

b) une quantité, pour stabiliser vis-à-vis de l'hydrolyse l'alkylcatéchol boraté, d'une amine choisie dans le groupe consistant en

i) une ou plusieurs monoalkylamines de formule :

$H_2N - R^i$

dans laquelle $R^i$ représente un radical hydrocarboné aliphatique ayant 2 à 10 atomes de carbone, contenant facultativement un à trois groupes hydroxyle, ou un radical hydrocarboné alicyclique ayant 5 ou 6 atomes de carbone ;

ii) une ou plusieurs dialkylamines de formule :

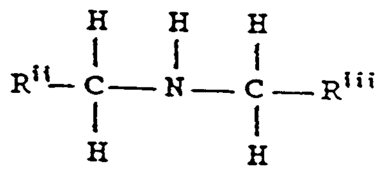

dans laquelle $R^{ii}$ représente un radical phényle ou un radical hydrocarboné aliphatique ayant 2 à 9 atomes de carbone et $R^{iii}$ est choisi dans le groupe consistant en l'hydrogène, un radical phényle, et un radical hydrocarboné aliphatique ayant 1 à 9 atomes de carbone, et dans laquelle $R^{ii}$ et/ou $R^{iii}$ peuvent former facultativement un noyau alicyclique penta- ou hexagonal avec l'atome de carbone alpha ; et dans laquelle le nombre total d'atomes de carbone dans $R^{ii}$ plus $R^{iii}$ est non supérieur à 16 ;

iii) une ou plusieurs trialkylamines de formule

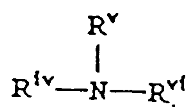

dans laquelle $R^{iv}$, $R^v$ et $R^{vi}$ peuvent être identiques ou différents et représentent un radical hydrocarboné aliphatique ayant 1 à 9 atomes de carbone : ou un radical hydrocarboné alicyclique ayant 5 ou 6 atomes de carbone ; et chacun des radicaux $R^{iv}$, $R^v$ et $R^{vi}$ contient facultativement un à trois groupes hydroxyle ; et

d) des mélanges de i), ii) et iii).

**2.** Complexe suivant la revendication 1, dans lequel l'amine consiste en une ou plusieurs monoalkylamines de formule

$H_2N - R^i$

dans laquelle $R^i$ représente un radical hydrocarboné aliphatique ayant 2 à 10 atomes de carbone, contenant facultativement un à trois groupes hydroxyle, ou un radical hydrocarboné alicyclique ayant 5 ou 6 atomes de carbone.

**3.** Complexe suivant la revendication 1, dans lequel l'amine consiste en une ou plusieurs dialkylamines de formule :

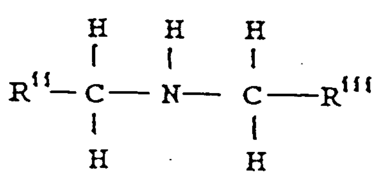

dans laquelle $R^{ii}$ représente un radical phényle ou un radical hydrocarboné aliphatique ayant 2 à 9

atomes de carbone et $R^{iii}$ est choisi dans le groupe consistant en l'hydrogène, un radical phényle et un radical hydrocarboné aliphatique ayant 1 à 9 atomes de carbone, et dans laquelle lesdits atomes de carbone aliphatiques de $R^{ii}$ et/ou $R^{iii}$ peuvent former facultativement un noyau alicyclique penta- ou hexagonal avec l'atome de carbone alpha ; et dans laquelle le nombre total d'atomes de carbone de $R^{ii}$ plus $R^{iii}$ est non supérieur à 16.

**4.** Complexe suivant la revendication 1, dans lequel l'amine consiste en une ou plusieurs trialkylamines de formule :

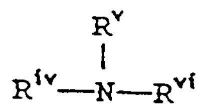

dans laquelle $R^{iv}$, $R^{v}$ et $R^{vi}$ peuvent être identiques ou différents et représentent un radical hydrocarboné aliphatique ayant 1 à 9 atomes de carbone ; ou un radical hydrocarboné alicyclique ayant 5 ou 6 atomes de carbone ; et chacun des radicaux $R^{iv}$, $R^{v}$ et $R^{vi}$ contient facultativement un à trois groupes hydroxyle, et dans lequel, en outre, l'alkylcatéchol boraté possède un rapport molaire du bore à l'alkylcatéchol égal à 2:3.

**5.** Complexe suivant l'une quelconque des revendications 2, 3 et 4, dans lequel la quantité d'amine est égale à au moins environ 0,8 mole d'amine par mole de bore.

**6.** Complexe suivant l'une quelconque des revendications 2, 3 et 4, dans lequel le rapport molaire de l'amine au bore est d'environ 0,8 à environ 1,1.

**7.** Complexe suivant l'une quelconque des revendications 2, 3 et 4, dans lequel le groupe alkyle de l'alkylcatéchol boraté contient 10 à 30 atomes de carbone.

**8.** Complexe suivant la revendication 7, dans lequel le groupe alkyle de l'alkylcatéchol boraté consiste en un mélange de groupes alkyle contenant 18 à 24 atomes de carbone.

**9.** Complexe suivant la revendication 7, dans lequel le groupe alkyle de l'alkylcatéchol boraté consiste en un mélange de groupes alkyle contenant 20 à 24 atomes de carbone.

**10.** Complexe suivant la revendication 9, dans lequel le rapport molaire de la dialkylamine au bore est égal à environ 1:1.

**11.** Complexe suivant l'une quelconque des revendications 2, 3 et 4, dans lequel l'alkylcatéchol boraté comprend un ou deux groupes alkyle et chaque groupe alkyle a 10 à 30 atomes de carbone.

**12.** Complexe suivant la revendication 2, dans lequel la monoalkylamine est choisie dans le groupe consistant en 2-éthylhexylamine ; cyclohexylamine ; éthylamine ; n-butylamine ; et hydroxyéthylamine.

**13.** Complexe suivant la revendication 3, dans lequel la dialkylamine est choisie dans le groupe consistant en dihexylamine ; dicyclohexylamine ; et éthylbenzylamine.

**14.** Complexe suivant la revendication 4, dans lequel la trialkylamine est choisie dans le groupe consistant en trihexylamine ; triéthylamine ; triéthanolamine et triisopropanolamine.

**15.** Procédé pour stabiliser vis-à-vis de l'hydrolyse un alkylcatéchol boraté répondant à la définition suivant la revendication 1, ledit procédé comprenant la mise en contact dudit alkylcatéchol boraté avec une quantité, à effet de stabilisation vis-à-vis de l'hydrolyse, d'une amine telle que définie dans la revendication 1 dans des conditions dans lesquelles un complexe est formé entre ladite amine et ledit alkylcatéchol boraté.

**16.** Procédé suivant la revendication 15, dans lequel l'amine consiste en une ou plusieurs monoalkylamines de formule :

$H_2N - R^i$

dans laquelle $R^i$ représente un radical hydrocarboné aliphatique ayant 2 à 10 atomes de carbone contenant facultativement un à trois groupes hydroxyle, ou un radical hydrocarboné alicyclique ayant 5 ou 6 atomes de carbone.

**17.** Procédé suivant la revendication 15, dans lequel l'amine consiste en une ou plusieurs dialkylamines de formule :

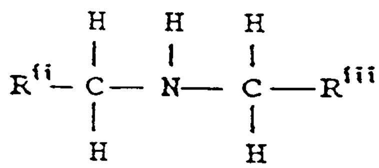

dans laquelle $R^{ii}$ représente un radical phényle ou un radical hydrocarboné aliphatique ayant 2 à 9 atomes de carbone et $R^{iii}$ est choisi dans le groupe consistant en l'hydrogène, un radical phényle et un radical hydrocarboné aliphatique ayant 1 à 9 atomes de carbone, et dans laquelle lesdits atomes de carbone aliphatiques de $R^{ii}$ et/ou $R^{iii}$ peuvent former facultativement un noyau alicyclique penta- ou hexagonal avec l'atome de carbone alpha ; et dans laquelle le nombre total d'atomes de carbone dans $R^{ii}$ plus $R^{iii}$ est non supérieur à 16.

**18.** Procédé suivant la revendication 15, dans lequel l'amine consiste en une ou plusieurs trialkylamines de formule :

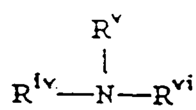

dans laquelle $R^{iv}$, $R^v$ et $R^{vi}$ peuvent être identiques ou différents et représentent un radical hydrocarboné aliphatique ayant 1 à 9 atomes de carbone ; ou un radical hydrocarboné alicyclique ayant 5 ou 6 atomes de carbone ; et chacun des radicaux $R^{iv}$, $R^v$ et $R^{vi}$ contient facultativement un à trois groupes hydroxyle, et dans lequel, en outre, l'alkylcatéchol boraté possède un rapport molaire du bore à l'alkylcatéchol égal à 2:3.

**19.** Procedé suivant l'une quelconque des revendications 16, 17 et 18, dans lequel le groupe alkyle de l'alkylcatéchol boraté contient 10 à 30 atomes de carbone ; et la quantité d'amine est telle que le rapport molaire de l'amine au bore soit un rapport molaire de 0,8 à 1,1.

**20.** Procédé suivant l'une quelconque des revendications 16, 17 et 18, dans lequel le complexe est formé en présence d'un solvant et à une température de 30 °C à 100 °C.

**21.** Composition d'huile lubrifiante comprenant une quantité dominante d'une huile de viscosité propre à la lubrification et une petite quantité du complexe alkylcatéchol boraté-amine stable à l'hydrolyse suivant l'une quelconque des revendications 1 à 14.

**22.** Composition d'huile lubrifiante suivant la revendication 21, dans laquelle la quantité du complexe est comprise dans l'intervalle de 0,05 pour cent à 20 pour cent en poids de ladite composition.

**23.** Concentré pour huile lubrifiante, comprenant une huile neutre servant de véhicule et une quantité d'environ 5 à environ 80 pour cent en poids d'un complexe alkylcatéchol boraté-amine stable à l'hydrolyse répondant à la définition suivant l'une quelconque des revendications 1 à 14.